# EUROPÄISCHE PATENTANMELDUNG

(11) **EP 4 834 461 A1**
(43) Veröffentlichungstag der Anmeldung: **04.11.2026**
(21) Anmeldenummer: 26169052.3
(22) Anmeldetag: 30.03.2026
(51) Int. Cl.: B01D 46/24

(54) **FILTERPATRONE UND ENTSTAUBUNGSANLAGE**

(30) Priorität: 30.04.2025 DE 202025102373 U
(71) Anmelder: Jakschik ULT Gruppe GmbH & Co. KG, 02708 Löbau (DE)
(72) Erfinder: Liebner, Bork, 01723 Wilsdruff (DE); Kaiser, Tommy, 01277 Dresden (DE); Weinert, Karl, 01067 Dresden (DE)
(74) Vertreter: Lippert Stachow Patentanwälte Rechtsanwälte Partnerschaft mbB

(57) **Zusammenfassung**

Es wird eine Filterpatrone (100) mit einem Befestigungsflansch (110) zur Befestigung der Filterpatrone (100) in einer Entstaubungsanlage (200) angegeben. Der Befestigungsflansch (110) weist auf: eine Abschrägung (111), die formschlüssig mit einem Hakenelement (201) der Entstaubungsanlage (200) verbindbar ist, und ein gegenüberliegend der Abschrägung (111) angeordnetes Aufnahmeelement (112), das mit einer Befestigungseinrichtung (202) der Entstaubungsanlage (200) kraftschlüssig verbindbar ist.

## Beschreibung

Die Erfindung betrifft eine Filterpatrone mit einem Befestigungsflansch zur Befestigung der Filterpatrone in einer Entstaubungsanlage sowie eine Entstaubungsanlage.

In emissionsbehafteten Fertigungsprozessen, beispielsweise dem Laserschneiden oder Schweißen, werden häufig Schadstoffpartikel freigesetzt, welche in der Umgebungsluft sehr gesundheitsschädlich wirken können. Daher ist der Einsatz von Entstaubungsanlagen notwendig, welche die schadstoffbelastete Luft, hier auch als Rohgas bezeichnet, erfassen, filtern und wieder gereinigt in die Umgebung abgeben. Für diesen Filtrationsprozess werden unter anderem Filterpatronen eingesetzt, welche manuell in die Anlagen ein- und ausgebaut werden. Eine zentrale Rolle für die Montage der Filterpatronen spielt der Filterkopf bzw. Befestigungsflansch, über welchen die Filterpatrone in der Anlage montiert wird.

Insbesondere bei größeren Entstaubungsanlagen und entsprechend größeren Filterpatronen kann sich der Ein- und Ausbau bzw. Montagevorgang als schwierig erweisen. Für die Montage einer Filterpatrone haben sich verschiedene Einbaumechanismen etabliert. Häufig wird beispielsweise die Aufhängung über Hakenflansche angewendet, wobei diese standardisiert ausgeführt sein können. Beispielsweise kann ein standardisierter 3-Haken-Flansch verwendet werden, um die Filterpatrone rohgasseitig in der Anlage zu montieren. Zum Lösen der Verschraubungen muss dabei jedoch im Rohgasraum gearbeitet werden. Mit anderen Worten ist durch die rohgasseitige Montage der Filterpatrone bei einem Filterwechsel die Arbeit im Rohgasraum notwendig.

Als problematisch erweist sich daher die Handhabung der Filterpatrone in Kombination mit dem für den Filterpatronenwechsel notwendigen Arbeiten im Rohgasbereich der Entstaubungsanlage, da es hier zu einer Kontamination des Monteurs kommen kann. Um dies zu vermeiden sind aufwändige Schutzmaßnahmen erforderlich, die den Wechsel der Filterpatrone erschweren.

Vor diesem Hintergrund ist es eine Aufgabe der Erfindung, eine Filterpatrone für eine Entstaubungsanlage anzugeben, mit der die vorstehend genannten Nachteile zumindest teilweise vermieden werden können. Wünschenswert wäre die Möglichkeit eines Filterpatronenwechsels, bei welchem die Kontaminationsgefahr des Monteurs verringert ist oder sogar vermieden werden kann, dass der Monteur einer Kontamination im Rohgasraum ausgesetzt ist.

Gelöst wird diese Aufgabe durch die Gegenstände der unabhängigen Ansprüche. Die abhängigen Ansprüche betreffen Ausgestaltungen.

Ein erster Aspekt der Erfindung betrifft eine Filterpatrone für eine Entstaubungsanlage. Mit anderen Worten ist die Filterpatrone zum Entstauben von Rohgasen ausgebildet und kann zum Entstauben von Rohgasen verwendet werden.

Die Filterpatrone weist einen Befestigungsflansch zur Befestigung der Filterpatrone in der Entstaubungsanlage, beispielsweise an einer Filterpatronenaufnahme der Entstaubungsanlage, auf. Der Befestigungsflansch weist eine Abschrägung auf, die formschlüssig mit einem Hakenelement der Entstaubungsanlage verbindbar ist. Vorzugsweise kann die Abschrägung korrespondierend zum Hakenelement der Entstaubungsanlage, insbesondere zu einem Hakenelement einer Filterpatronenaufnahme der Entstaubungsanlage, geformt oder ausgebildet sein. Mit anderen Worten dient die Abschrägung der Einpassung in das Hakenelement und die Abschrägung kann mit dem Hakenelement formschlüssig zusammenwirken. Im montierten Zustand der Filterpatrone in der Entstaubungsanlage ist die Abschrägung des Befestigungsflanschs der Filterpatrone formschlüssig mit dem Hakenelement verbunden.

Weiterhin weist die Filterpatrone ein gegenüberliegend der Abschrägung angeordnetes Aufnahmeelement auf, das mit einer Befestigungseinrichtung der Entstaubungsanlage kraftschlüssig verbindbar ist. Mit anderen Worten ist das Aufnahmeelement in einem Abschnitt des Befestigungsflanschs angeordnet, der demjenigen Abschnitt des Befestigungsflanschs, in dem sich die Abschrägung befindet, gegenüberliegt. Das Aufnahmeelement kann mit der Befestigungseinrichtung kraftschlüssig zusammenwirken. Im montierten Zustand der Filterpatrone in der Entstaubungsanlage ist das Aufnahmeelement des Befestigungsflanschs der Filterpatrone kraftschlüssig mit der Befestigungseinrichtung, insbesondere einem Führungselement der Befestigungseinrichtung, verbunden.

Zur Befestigung oder Montage der Filterpatrone in der Entstaubungsanlage wird diese zunächst mit der Abschrägung ihres Befestigungsflanschs in das Hakenelement der Entstaubungsanlage eingehakt. Vorzugsweise kann die Filterpatrone bereits nach dieser formschlüssigen Verbindung der Abschrägung mit dem Hakenelement ihre Position ohne weitere Befestigungs- oder Ausrichtungsmaßnahmen halten, was den Montagevorgang deutlich erleichtert. Anschließend wird eine kraftschlüssige Verbindung zwischen dem Aufnahmeelement und der Befestigungseinrichtung ausgebildet, wodurch die Filterpatrone an einem Filterpatronenaufnahmeflansch der Entstaubungsanlage ortsunveränderlich und vorzugsweise gasdicht befestigt wird.

Die vorgeschlagene Filterpatrone vereinfacht die Montage und Demontage der Filterpatrone in einer Entstaubungsanlage erheblich. Insbesondere kann ein Wechsel der Filterpatrone ohne das Arbeiten im Rohgasbereich oder zumindest mit nur geringfügiger Rohgasexposition ermöglicht sein, indem die kraftschlüssige Verbindung zwischen Aufnahmeelement und Befestigungseinrichtung entsprechend ausgebildet und angeordnet ist. Beispielsweise kann die kraftschlüssige Verbindung zwischen Aufnahmeelement und Befestigungseinrichtung derart ausgebildet und angeordnet sein, dass der Monteur lediglich mit einem Arm bis maximal zur Schulter, also z. B. maximal 100 cm oder maximal 80 cm ausgehend von einer Wartungsöffnung, in den Rohgasbereich greifen muss, sein Kopfbereich jedoch stets außerhalb des Rohgasbereichs bleibt. Daher ist ein Monteur der Filterpatrone einer deutlich geringeren Kontamination ausgesetzt. Bei der Verwendung einer Filterpatrone mit Hakenflansch nach dem Stand der Technik ist dies nicht möglich, da zum Lösen der Verschraubungen im Rohgasraum gearbeitet werden muss.

Gemäß verschiedenen Ausführungsvarianten kann die Filterpatrone eine Dichtung aufweisen, wobei die Dichtung in den Befestigungsflansch eingepasst ist.

Die Dichtung kann zum Beispiel als Runddichtung oder Flachdichtung ausgebildet sein. Beispielsweise kann die Dichtung in einer Vertiefung oder Rille des Befestigungsflanschs angeordnet sein. Vorzugsweise kann die Dichtung eine Durchlassöffnung des Befestigungsflanschs vollständig umschließen. Das Entweichen von Rohgas im Befestigungsbereich zwischen Filterpatrone und Filterpatronenaufnahme der Entstaubungsanlage kann dadurch weiter verringert oder sogar gänzlich vermieden werden.

Gemäß weiteren Ausführungsvarianten kann eine Durchlassöffnung des Befestigungsflanschs einem kreisförmigen Querschnitt aufweisen.

Dies kann zu einer Verbesserung der Strömungsverhältnisse innerhalb der Filterpatrone und dadurch zu einer Verbesserung der Filterwirkung beitragen. Zudem kann dadurch die Herstellung der Filterpatrone und ggf. ihrer Dichtung vereinfacht sein.

Gemäß weiteren Ausführungsvarianten kann die Filterpatrone ein Filtermaterial aufweisen, wobei das Filtermaterial stoffschlüssig mit dem Befestigungsflansch verbunden ist.

Die stoffschlüssige Verbindung kann dazu beitragen, ein unerwünschtes Eindringen von Rohgas aus dem Rohgasraum in den Reingasraum zu verhindern. Das Filtermaterial kann beispielsweise in oder an den Befestigungsflansch geklebt sein. Vorzugsweise kann das Filtermaterial derart angeordnet sein, dass die Durchlassöffnung des Befestigungsflanschs vollständig vom Filtermaterial umgeben wird. Hierdurch kann die Filterwirkung weiter erhöht werden.

Gemäß weiteren Ausführungsvarianten kann die Filterpatrone zur stehenden Anordnung in der Entstaubungsanlage ausgebildet sein.

Die Montage kann beispielsweise senkrecht oder gegenüber der Vertikalen geneigt erfolgen. Vorzugsweise kann die Filterpatrone als selbsttragende, bevorzugt zylindrische, Filterpatrone ausgebildet sein.

Die stehende Anordnung der Filterpatrone kann sich vorteilhaft auf die Strömungsverhältnisse während der Entstaubung auswirken, so dass die Entstaubung mit höherer Effizienz und/oder Effektivität erfolgen kann.

Ein weiterer Aspekt der Erfindung betrifft eine Entstaubungsanlage zur Entstaubung von Rohgas mit einer Filterpatronenaufnahme, die zur Befestigung einer Filterpatrone ausgebildet ist. Insbesondere kann eine Filterpatrone gemäß vorstehender Beschreibung an der Filterpatronenaufnahme befestigt sein oder werden. Insofern wird ergänzend auf die vorstehende Beschreibung der Filterpatrone verwiesen. Mit der Entstaubungsanlage sind die Vorteile der Filterpatrone entsprechend verbunden.

Die Filterpatronenaufnahme der vorgeschlagenen Entstaubungsanlage weist einen Filterpatronenaufnahmeflansch und ein an dem Filterpatronenaufnahmeflansch angeordnetes Hakenelement, das formschlüssig mit einer Abschrägung an einem Befestigungsflansch der Filterpatrone verbindbar ist, auf. Das Hakenelement kann beispielsweise nach Art einer Kralle ausgebildet sein. Das Hakenelement kann eine Führung und/oder Positionierung der eingesetzten Filterpatrone bewirken. Beispielsweise kann das Hakenelement zur positionsstabilen Halterung der Filterpatrone am Filterpatronenaufnahmeflansch ausgebildet sein.

Vorzugsweise kann das Hakenelement korrespondierend zu einer Abschrägung eines Befestigungsflanschs einer Filterpatrone geformt oder ausgebildet sein. Mit anderen Worten kann eine solche Abschrägung in das Hakenelement eingepasst sein oder werden und das Hakenelement kann mit der Abschrägung formschlüssig zusammenwirken. Im montierten Zustand der Filterpatrone in der Entstaubungsanlage ist die Abschrägung des Befestigungsflanschs der Filterpatrone formschlüssig mit dem Hakenelement verbunden.

An dem Filterpatronenaufnahmeflansch ist außerdem dem Hakenelement gegenüberliegend eine Befestigungseinrichtung angeordnet, der kraftschlüssig mit einem Aufnahmeelement an dem Befestigungsflansch der Filterpatrone verbindbar ist. Im montierten Zustand der Filterpatrone in der Entstaubungsanlage ist die Befestigungseinrichtung kraftschlüssig mit dem Aufnahmeelement des Befestigungsflanschs der Filterpatrone verbunden.

Gemäß verschiedenen Ausführungsvarianten kann die Befestigungseinrichtung ein Klemmteil und eine Schraubverbindung aufweisen. Hierbei ist das Klemmteil mittels der Schraubverbindung kraftschlüssig mit dem Aufnahmeelement an dem Befestigungsflansch der Filterpatrone verbindbar.

Mit anderen Worten kann durch Anziehen bzw. Lösen der Schraubverbindung ein Kraftschluss zwischen Klemmteil und Aufnahmeelement hergestellt bzw. wieder gelöst werden. Die Schraubverbindung kann beispielsweise derart angeordnet und ausgebildet sein, dass durch Anziehen bzw. Lösen der Mutter der Schraubverbindung der Kraftschluss hergestellt bzw. wieder gelöst wird. Beispielsweise kann die aus einer Schraube und einer Mutter mit Anschlag bestehende Schraubverbindung derart positioniert sein, dass die Mutter von außen zugänglich ist und auf einfache Art und Weise betätigt werden kann.

Die Schraubverbindung kann vorzugsweise mit dem Filteraufnahmeflansch mechanisch verbunden sein, so dass mittels der Schraubverbindung die Position des Klemmteils im Bezug auf den Filterpatronenaufnahmeflansch variiert werden kann. Folglich kann die Schraubverbindung das Klemmteil mit dem Filterpatronenaufnahmeflansch mechanisch verbinden.

Im gelösten Zustand, d. h. bei gelöster Schraubverbindung, kann das Klemmteil frei beweglich sein.

Gemäß weiteren Ausführungsvarianten kann die Befestigungseinrichtung ein Führungselement aufweisen.

Optional können zwei Führungselemente vorhanden sein, z. B. beidseits des Klemmteils. Vorzugsweise kann das Führungselement formschlüssig mit dem Befestigungsflansch der Filterpatrone, z. B. dem Aufnahmeelement des Befestigungsflanschs, verbindbar ausgebildet sein. Beispielsweise kann das Führungselement eine Führung des Befestigungsflanschs der Filterpatrone bewirken, indem es formschlüssig mit dem Befestigungsflansch zusammenwirkt. Insbesondere kann eine seitliche Führung realisiert sein oder werden.

Das Führungselement kann ortsfest am Filterpatronenaufnahmeflansch angeordnet sein.

Mittels des Führungselements kann eine genaue Positionierung, z. B. Zentrierung, der Filterpatrone bewirkt werden, wodurch Fehler bei der Montage der Filterpatrone und eine nachfolgende Fehlfunktion der Entstaubungsanlage vermieden werden können. Zudem kann die Montage der Filterpatrone auch durch weniger geschultes Personal erfolgen.

Optional kann vorgesehen sein, dass das Klemmteil formschlüssig mit dem Führungselement verbindbar ist. Beispielsweise kann eine formschlüssige Verbindung zwischen dem Klemmteil und dem oder den Führungselement(en) durch Anziehen oder Lösen der Schraubverbindung der Befestigungseinrichtung bewirkt bzw. gelöst werden.

Zur Befestigung oder Montage der Filterpatrone kann vorgesehen sein, dass nach der Positionierung der Filterpatrone mit ihrer Abschrägung im Hakenelement das Klemmteil in das Führungselement eingehakt wird. Durch Anziehen der Verschraubung wird das Klemmteil gegen das Aufnahmeelement gedrückt, wodurch der Befestigungsflansch gegen den Filterpatronenaufnahmeflansch gepresst wird. Das Führungselement dient hierbei der Zentrierung des Befestigungsflanschs.

Gemäß weiteren Ausführungsvarianten kann die Filterpatronenaufnahme zur stehenden Halterung der Filterpatrone ausgebildet sein.

Gemäß weiteren Ausführungsvarianten kann Entstaubungsanlage eine Filterpatrone gemäß vorstehender Beschreibung aufweisen, wobei die Filterpatrone an der Filterpatronenaufnahme, insbesondere mittels ihres Befestigungsflanschs an dem Filterpatronenaufnahmeflansch, befestigt ist.

Gemäß weiteren Ausführungsvarianten kann die kraftschlüssige Verbindung zwischen dem Aufnahmeelement und der Befestigungseinrichtung derart ausbildbar und anordenbar sein oder ausgebildet und angeordnet sein, dass eine Entfernung zwischen einer Wartungsöffnung zur Montage oder Demontage der Filterpatrone und der kraftschlüssigen Verbindung maximal 100 cm, bevorzugt maximal 80 cm, beträgt.

Gemäß weiteren Ausführungsvarianten kann lediglich eine einzige kraftschlüssige Verbindung zwischen der Filterpatrone und der Entstaubungsanlage ausbildbar oder ausgebildet sein.

Ist nur eine einzige kraftschlüssige Verbindung vorhanden, so umfasst die Montage oder Demontage lediglich ein Herstellen oder Lösen dieser einzigen Verbindung. Die Montage bzw. Demontage der Filterpatrone kann daher zügig und auf einfache Art und Weise erfolgen. Der Monteur ist folglich lediglich über einen geringen Zeitraum einer möglichen Kontamination ausgesetzt.

Im Folgenden wird die Erfindung beispielhaft unter Bezugnahme auf die anliegenden Figuren anhand bevorzugter Ausführungsformen erläutert, wobei die nachfolgend dargestellten Merkmale sowohl jeweils für sich genommen als auch in verschiedenen Kombinationen miteinander einen Aspekt der Erfindung darstellen können. Es zeigen:
- Fig. 1: eine schematische Darstellung einer beispielhaften Entstaubungsanlage;
- Fig. 2a: eine schematische Darstellung einer beispielhaften Filterpatrone in Seitenansicht;
- Fig. 2b: die Filterpatrone der Fig. 2a in perspektivischer Ansicht;
- Fig. 3a: eine schematische Darstellung einer beispielhaften, in einer Entstaubungsanlage montierten Filterpatrone in Seitenansicht;
- Fig. 3b: die in der Entstaubungsanlage montierte Filterpatrone der Fig. 3a in perspektivischer Ansicht;
- Fig. 4a: eine schematische Darstellung eines Befestigungsflanschs einer Filterpatrone im nicht montierten Zustand zusammen mit der zugehörigen Filterpatronenaufnahme einer Entstaubungsanlage; und
- Fig. 4b: der Befestigungsflansch der Fig. 4a montiert an der Filterpatronenaufnahme der Fig. 4a.

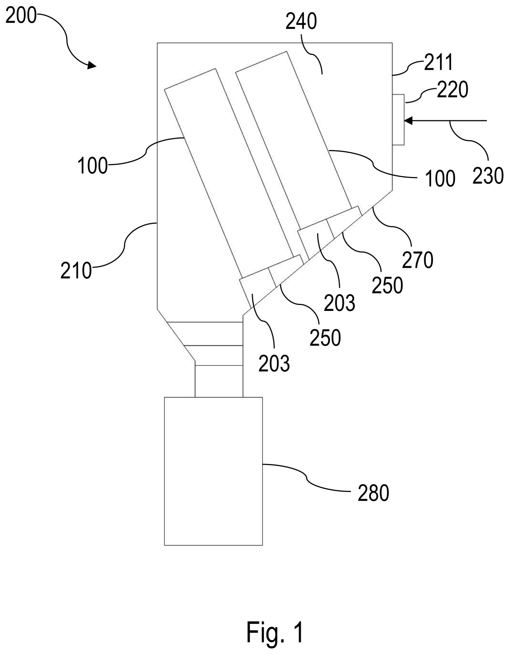

Fig. 1 zeigt eine beispielhafte Entstaubungsanlage 200. Die Entstaubungsanlage 200 weist ein Gehäuse 210 auf, das von Gehäusewänden 211 begrenzt ist und in dem mehrere Filterpatronen 100 angeordnet sind. Im oberen Bereich des Gehäuses 210 ist in einer vertikalen Gehäusewand 211 eine Rohgas-Eintrittsöffnung 220 angeordnet, durch die das zu behandelnde Rohgas 230 in den Rohgasraum 240 strömt. Im unteren Bereich des Gehäuses 210 befinden sich die Reingas-Austrittsöffnungen 250.

Die Filterpatronen 100 sind, bezogen auf die Strömungsrichtung des zu entstaubenden Rohgases 230, zwischen der Rohgas-Eintrittsöffnung 220 und den Reingas-Austrittsöffnungen 250 angeordnet. Die Filterpatronen 100 sind selbsttragende zylindrische Filterpatronen.

Die Filterpatronen 100 sind mit ihrem offenen Ende stehend an jeweils einer Filterpatronenaufnahme 203 lösbar montiert. Die Filterpatronenaufnahmen 203 sind auf einer Trägerplatte 270 angeordnet, die als gegenüber der Horizontalen geneigte Ebene ausgeführt, so dass die Filterpatronen 100 gegenüber der Vertikalen geneigt angeordnet sind. Unterhalb der Trägerplatte 270 ist ein Auffangbehälter 280 für abfiltrierten Staub angeordnet.

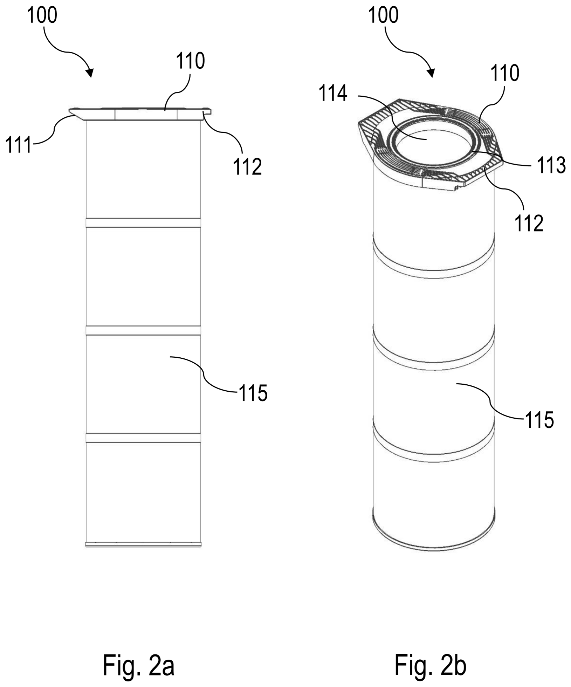

In Fig. 2 ist eine beispielhafte Filterpatrone 100 schematisch dargestellt, die als selbsttragende zylindrische Filterpatrone ausgebildet ist. Zur Befestigung der Filterpatrone 100 in einer Entstaubungsanlage 200 weist die Filterpatrone 100 einen Befestigungsflansch 110 auf. Die Durchlassöffnung 114 des Befestigungsflansch 110 weist einen im Wesentlichen kreisförmigen Querschnitt auf. In den Befestigungsflansch 110 ist ein Filtermaterial 115 eingeklebt und dadurch stoffschlüssig mit dem Befestigungsflansch 110 verbunden.

Der Befestigungsflansch 110 ist im Wesentlichen achssymmetrisch ausgebildet, wobei die Symmetrieachse durch den Mittelpunkt des Querschnitts der Durchlassöffnung 114 verläuft. Auf einer Seite des Befestigungsflanschs 110 befindet sich eine Abschrägung 111, d. h. eine Kante des Befestigungsflanschs 110 ist ausgehend von der Oberseite bzw. Montagefläche des Befestigungsflanschs 110, also derjenigen Fläche, die nach Montage in Kontakt mit dem Filterpatronenaufnahmeflansch 204 der Entstaubungsanlage 200 steht, in Richtung des Filtermaterials 115 abgeschrägt. Die Abschrägung 111 ist derart ausgebildet, dass sie zur Montage der Filterpatrone 100 in einer Entstaubungsanlage 200 formschlüssig mit einem Hakenelement 201 der Entstaubungsanlage verbindbar ist.

Gegenüberliegend zur Abschrägung 111 ist ein Aufnahmeelement 112 am Befestigungsflansch 110 angeordnet. Das Aufnahmeelement 112 weist ausgehend von der Montagefläche des Befestigungsflanschs 110 eine Stufe in Richtung des Filtermaterials 115 auf. Das Aufnahmeelement 112 ist derart ausgebildet, dass es zur Montage der Filterpatrone 100 in einer Entstaubungsanlage 200 mit einer Befestigungseinrichtung 202 der Entstaubungsanlage 200 kraftschlüssig verbindbar ist.

Zudem ist in die Montagefläche des Befestigungsflansch 110 eine Dichtung 113 eingepasst, die die Durchlassöffnung 114 kreisförmig umschließt. Im Ausführungsbeispiel ist die Dichtung 113 als Runddichtung ausgebildet.

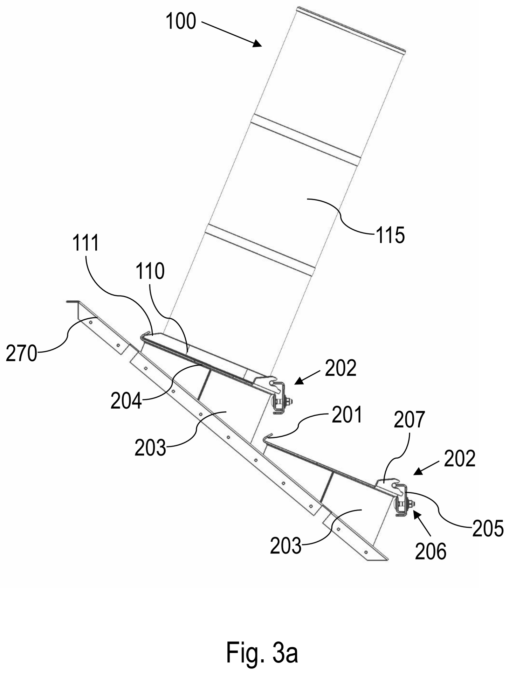

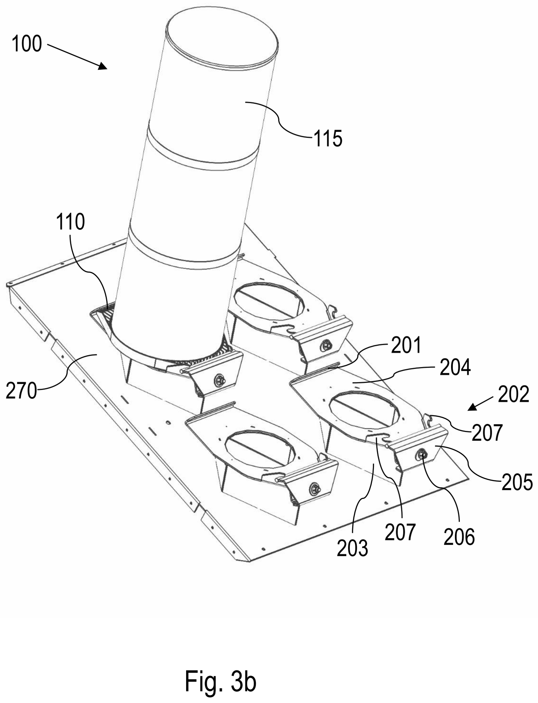

Fig. 3 zeigt eine beispielhafte Filterpatrone 100, die in einer Entstaubungsanlage 200 stehend montiert ist. Beispielsweise kann die Filterpatrone 100 wie zu Fig. 2 beschrieben, die Entstaubungsanlage 200 wie zu Fig. 1 beschrieben ausgebildet sein. Zur Verdeutlichung der Montagesituation ist in Fig. 3 lediglich ein Abschnitt der Entstaubungsanlage 200 dargestellt, nämlich die Trägerplatte 270 mit den darauf angeordneten Filterpatronenaufnahmen 203. Für weitere Details der Entstaubungsanlage 200 wird auf Fig. 1 verwiesen.

Insgesamt sind vier baugleiche Filterpatronenaufnahmen 203 vorhanden (siehe Fig. 3b), d. h. insgesamt können vier Filterpatronen 100 in der Entstaubungsanlage 200 montiert werden. Es sei darauf hingewiesen, dass zur besseren Übersichtlichkeit einige Bauteile der Filterpatronenaufnahme 203 lediglich an einer der vier Filterpatronenaufnahmen 203 gekennzeichnet sind, jedoch analog bei den übrigen drei Filterpatronenaufnahmen 203 vorhanden sind.

Jede der Filterpatronenaufnahmen 203 weist einen Filterpatronenaufnahmeflansch 204 auf, der zur Montage der Filterpatrone 100 mit dem Befestigungsflansch 110 der Filterpatrone 100 form- und kraftschlüssig verbunden wird. Jeder Filterpatronenaufnahmeflansch 204 ist im Wesentlichen achssymmetrisch ausgebildet, wobei die Symmetrieachse durch den Mittelpunkt des Querschnitts der Durchlassöffnung verläuft. An dem Filterpatronenaufnahmeflansch 204 ist auf einer Seite ein Hakenelement 201 angeordnet. Dieses Hakenelement 201 ist mit der Abschrägung 111 der Filterpatrone 100 formschlüssig verbindbar und ermöglicht eine positionsstabile Halterung der Filterpatrone 100.

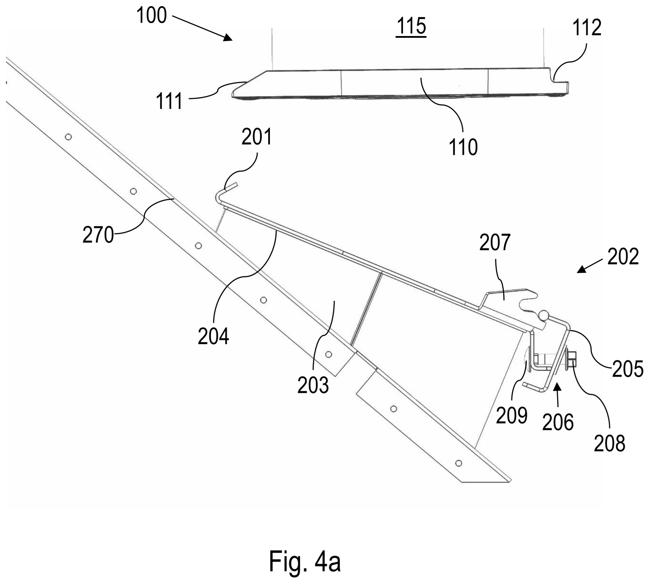

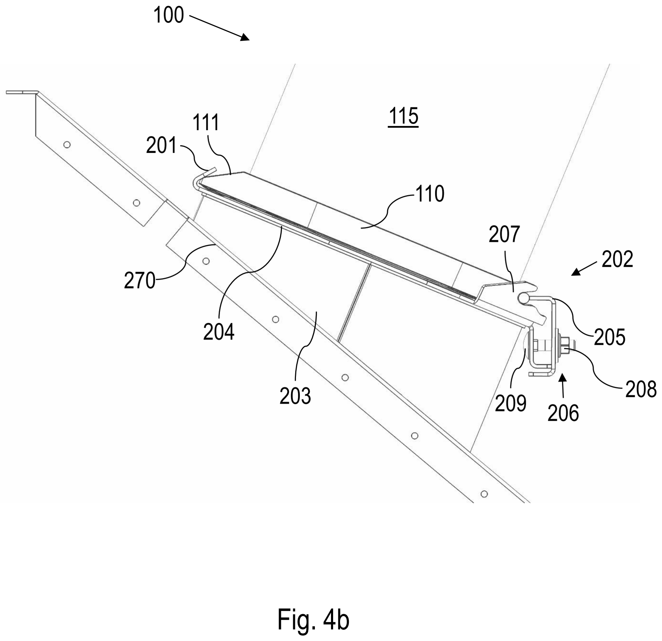

Dem Hakenelement 201 gegenüberliegend ist eine Befestigungseinrichtung 205 an dem Filterpatronenaufnahmeflansch 204 angeordnet, die kraftschlüssig mit dem Aufnahmeelement 112 an dem Befestigungsflansch 110 der Filterpatrone 100 verbindbar ist. Hierfür verfügt die Befestigungseinrichtung 205 über ein Klemmteil 205 und eine Schraubverbindung 206 mit einer Schraube 209 und einer Mutter 208 (siehe Fig. 4). Das Klemmteil 205 ist mittels der Schraubverbindung 206 an der Filterpatronenaufnehme 203 befestigt, bei gelöster Schraubverbindung 206 jedoch im Wesentlichen frei beweglich. Durch Betätigen der Schraubverbindung 206, im Ausführungsbeispiel durch Anziehen oder Lösen der Mutter 208, kann das Klemmteil 205 mit dem Aufnahmeelement 112 kraftschlüssig verbunden bzw. vom Aufnahmeelement 112 gelöst werden.

Darüber hinaus weist die Befestigungseinrichtung 202 zwei Führungselemente 207 auf, die ortsunveränderlich beidseits des Klemmteils 205 angeordnet sind und der Zentrierung des Befestigungsflanschs 110 während der Montage der Filterpatrone 100 dienen.

Weitere Details der Filterpatrone 100 und der Entstaubungsanlage 200 sind in Fig. 4a und Fig. 4b erkennbar.

Zur Montage der Filterpatrone 100 in der Entstaubungsanlage 200 wird in einem ersten Schritt die Abschrägung 111 der Filterpatrone 100 in das Hakenelement 201 der Filterpatronenaufnahme 203 eingehakt und somit formschlüssig verbunden. Auch ohne weitere Befestigung wird die Filterpatrone 100 durch die formschlüssige Verbindung und ihre stehende Anordnung gehalten, was den weiteren Montagevorgang deutlich erleichtert.

In einem weiteren Montageschritt wird das Klemmteil 205 in das Führungselement 207 eingehakt, also mit dem Führungselement 207 formschlüssig verbunden (siehe Fig. 4b). Durch Anziehen der Schraubverbindung 206 wird das Klemmteil 205 gegen das Aufnahmeelement 112 des Befestigungsflanschs 110 der Filterpatrone 100 gedrückt, wodurch der Befestigungsflansch 110 gegen den Filterpatronenaufnahmeflansch 204 gepresst wird. Die beiden Führungselemente 207 dienen hierbei der Zentrierung des Befestigungsflanschs 110, so dass eine fehlerhafte Montage und damit möglicherweise einhergehende Undichtheiten vermieden werden können.

Zur Demontage der Filterpatrone 100 werden die Verfahrensschritte in umgekehrter Reihenfolge ausgeführt, d. h. zunächst wird die Schraubverbindung 206 gelöst und anschließend die Abschrägung 111 aus dem Hakenelement 201 ausgehakt und entfernt.

Vorteilhaft kann die Montage bzw. Demontage der Filterpatrone 100 in der Entstaubungsanlage 200 durch Ausbilden bzw. Lösen einer einzigen kraftschlüssigen Verbindung erfolgen, sodass die Arbeitszeit des Monteurs im Rohgasraum 240 und damit in einem möglicherweise kontaminierten Bereich sehr geringgehalten werden kann. Durch die spezielle Gestaltung des Befestigungsflanschs 110 der Filterpatrone 100 und der Filterpatronenaufnahme 203 der Entstaubungsanlage 200 kann der Wechsel der Filterpatronen 100 einfach und schnell erfolgen. Montagefehler können weitgehend vermieden und dadurch die Betriebssicherheit der Entstaubungsanlage 200 erhöht werden.

### Bezugszeichenliste

- 100: Filterpatrone
- 110: Befestigungsflansch
- 111: Abschrägung
- 112: Aufnahmeelement
- 113: Dichtung
- 114: Durchlassöffnung
- 115: Filtermaterial

- 200: Entstaubungsanlage
- 201: Hakenelement
- 202: Befestigungseinrichtung
- 203: Filterpatronenaufnahme
- 204: Filterpatronenaufnahmeflansch
- 205: Klemmteil
- 206: Schraubverbindung
- 207: Führungselement
- 208: Mutter
- 209: Schraube
- 210: Gehäuse
- 211: Gehäusewand
- 220: Rohgas-Eintrittsöffnung
- 230: Rohgas
- 240: Rohgasraum
- 250: Reingas-Austrittsöffnung
- 270: Trägerplatte
- 280: Auffangbehälter

## Patentansprüche

1. Filterpatrone (100) mit einem Befestigungsflansch (110) zur Befestigung der Filterpatrone (100) in einer Entstaubungsanlage (200), der Befestigungsflansch (110) aufweisend:
- eine Abschrägung (111), die formschlüssig mit einem Hakenelement (201) der Entstaubungsanlage (200) verbindbar ist, und
- ein gegenüberliegend der Abschrägung (111) angeordnetes Aufnahmeelement (112), das mit einer Befestigungseinrichtung (202) der Entstaubungsanlage (200) kraftschlüssig verbindbar ist.

2. Filterpatrone (100) nach Anspruch 1, aufweisend eine Dichtung (113), wobei die Dichtung (113) in den Befestigungsflansch (110) eingepasst ist.

3. Filterpatrone (100) nach einem der vorstehenden Ansprüche, wobei eine Durchlassöffnung (114) des Befestigungsflanschs (110) einen kreisförmigen Querschnitt aufweist.

4. Filterpatrone (100) nach einem der vorstehenden Ansprüche, aufweisend ein Filtermaterial (115), wobei das Filtermaterial (115) stoffschlüssig mit dem Befestigungsflansch (110) verbunden ist.

5. Filterpatrone (100) nach einem der vorstehenden Ansprüche, wobei die Filterpatrone (100) zur stehenden Anordnung in der Entstaubungsanlage (200) ausgebildet ist.

6. Entstaubungsanlage (200) zur Entstaubung von Rohgas (230) mit einer Filterpatronenaufnahme (203), ausgebildet zur Befestigung einer Filterpatrone (100), die Filterpatronenaufnahme (203) aufweisend:
- einen Filterpatronenaufnahmeflansch (204),
- ein an dem Filterpatronenaufnahmeflansch (204) angeordnetes Hakenelement (201), das formschlüssig mit einer Abschrägung (111) an einem Befestigungsflansch (110) der Filterpatrone (100) verbindbar ist, und
- eine gegenüberliegend dem Hakenelement (201) an dem Filterpatronenaufnahmeflansch (204) angeordneten Befestigungseinrichtung (205), die kraftschlüssig mit einem Aufnahmeelement (112) an dem Befestigungsflansch (110) der Filterpatrone (100) verbindbar ist.

7. Entstaubungsanlage (200) nach Anspruch 6, wobei das Hakenelement (201) zur positionsstabilen Halterung der Filterpatrone (100) ausgebildet ist.

8. Entstaubungsanlage (200) nach Anspruch 6 oder 7, wobei die Befestigungseinrichtung (202) ein Klemmteil (205) und eine Schraubverbindung (206) aufweist, wobei das Klemmteil (205) mittels der Schraubverbindung (206) kraftschlüssig mit dem Aufnahmeelement (112) verbindbar ist.

9. Entstaubungsanlage (200) nach einem der Ansprüche 6 bis 8, wobei die Befestigungseinrichtung (202) ein Führungselement (207) aufweist.

10. Entstaubungsanlage (200) nach Anspruch 9, wobei das Führungselement (207) zur Zentrierung des Befestigungsflanschs (110) der Filterpatrone (100) ausgebildet ist.

11. Entstaubungsanlage (200) nach Anspruch 9 oder 10, wobei das Klemmteil (205) formschlüssig mit dem Führungselement (207) verbindbar ist.

12. Entstaubungsanlage (200) nach einem der Ansprüche 6 bis 11, wobei die Filterpatronenaufnahme (203) zur stehenden Halterung der Filterpatrone (100) ausgebildet ist.

13. Entstaubungsanlage (200) nach einem der Ansprüche 6 bis 12, aufweisend
- eine Filterpatrone (100) nach einem der Ansprüche 1 bis 5,
wobei die Filterpatrone (100) an der Filterpatronenaufnahme (203) befestigt ist.

14. Entstaubungsanlage (200) nach einem der Ansprüche 6 bis 13, wobei die kraftschlüssige Verbindung zwischen dem Aufnahmeelement (112) und der Befestigungseinrichtung (202) derart ausbildbar und anordenbar ist, dass eine Entfernung zwischen einer Wartungsöffnung zur Montage oder Demontage der Filterpatrone (100) und der kraftschlüssigen Verbindung maximal 100 cm, bevorzugt maximal 80 cm, beträgt.

15. Entstaubungsanlage (200) nach einem der Ansprüche 6 bis 14, wobei lediglich eine einzige kraftschlüssige Verbindung zwischen der Filterpatrone (100) und der Entstaubungsanlage (200) ausbildbar ist.
